# EUROPEAN PATENT APPLICATION

(11) **EP 4 694 337 A1**
(43) Date of publication of application: **11.02.2026**
(21) Application number: 24791956.6
(22) Date of filing: 15.04.2024
(51) Int. Cl.: H04W 36/00

(54) **COMMUNICATION METHOD AND APPARATUS**

(30) Priority: 21.04.2023 CN 202310443022
(71) Applicant: Huawei Technologies Co., Ltd., Shenzhen, Guangdong 518129 (CN)
(72) Inventor: ZHAO, Wangsheng, Shenzhen, Guangdong 518129 (CN); HUANG, Guogang, Shenzhen, Guangdong 518129 (CN); ZHANG, Yu, Shenzhen, Guangdong 518129 (CN); CHEN, Yubin, Shenzhen, Guangdong 518129 (CN)
(74) Representative: Goddar, Heinz J.
(86) International application number: PCT/CN2024/087705
(87) International publication number: WO 2024/217371

(57) **Abstract**

A communication method and apparatus are provided, applied to the field of communication technologies, may be applied to a wireless local area network system that supports 802.11 series protocols such as a next-generation Wi-Fi protocol of the IEEE 802.11ax, for example, 802.11be, Wi-Fi 7, or EHT, and a next-generation protocol of 802.11be, Wi-Fi 8, UHR, or Wi-Fi AI, and may be further applied to a UWB-supported WPAN system, a sensing system, and the like. After generating a first communication frame, a current AP or a target AP sends the first communication frame, and a non-AP STA receives the first communication frame and parses the first communication frame. The first communication frame includes first indication information, and the first indication information indicates whether the non-AP STA needs to initiate an IP address assignment request when the non-AP STA is handed over from the current AP to the target AP. In the method, a roaming handover time of the non-AP STA can be effectively reduced.

## Description

This application claims priority to Chinese Patent Application No. 202310443022.4, filed with the China National Intellectual Property Administration on April 21, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, there is a roaming handover scenario. For example, when a non-access point station (non-access point station, non-AP STA) is handed over from an access point (access point, AP) to another AP, and both the non-AP STA and the another AP support a fast initial link setup (fast initial link setup, FILS) protocol, the non-AP STA may assign an (internet protocol, IP) address by utilizing a reassociation request frame and a reassociation response frame. The reassociation request frame and the reassociation response frame each include an FILS IP address assignment element (FILS IP address assignment element).

When at least one of the non-AP STA and the another AP does not support the FILS protocol, the non-AP STA needs to initiate a separate IP address assignment request. For example, the non-AP STA performs dynamic host configuration protocol (dynamic host configuration protocol, DHCP) negotiation. In this mode, a roaming handover time of the non-AP STA may be further increased.

### SUMMARY

Embodiments of this application provide a communication method and apparatus, to prevent a non-AP STA from initiating an unnecessary IP address assignment request, so as to reduce a roaming handover time of the non-AP STA.

According to a first aspect, an embodiment of this application provides a communication method. The method is applied to a first communication apparatus. The method includes:
generating a first communication frame, where the first communication frame includes first indication information, and the first indication information indicates whether a non-access point station non-AP STA needs to initiate an internet protocol IP address assignment request when the non-AP STA is handed over from a current access point AP to a target AP; and sending the first communication frame.

In this embodiment of this application, the first communication apparatus may be a current AP or a target AP, and the first communication apparatus explicitly indicates, via the first indication information, whether the non-AP STA needs to initiate the IP address assignment request, so that the non-AP STA can explicitly learn, based on the first indication information, whether the non-AP STA needs to initiate the IP address assignment request. Therefore, the non-AP STA can be effectively prevented from initiating an unnecessary IP address assignment request (which may also be referred to as IP address negotiation). This improves necessity of re-initiating an IP address assignment request by the non-AP STA, reduces a roaming handover time of the non-AP STA, and reduces a service interruption time caused by roaming of the non-AP STA.

According to a second aspect, an embodiment of this application provides a communication method. The method is applied to a second communication apparatus. The method includes:
receiving a first communication frame, where the first communication frame includes first indication information, and the first indication information indicates whether a non-access point station non-AP STA needs to initiate an internet protocol IP address assignment request when the non-AP STA is handed over from a current access point AP to a target AP; and parsing the first communication frame.

In this embodiment of this application, the second communication apparatus may be the non-AP STA. When the first indication information indicates that the non-AP STA needs to initiate the IP address assignment request, necessity of initiating the IP address assignment request by the non-AP STA is improved. For example, when the first indication information indicates that the non-AP STA does not need to initiate the IP address assignment request, according to the method provided in this embodiment of this application, a roaming handover time of the non-AP STA can be effectively shortened, a service interruption time can be reduced, and unnecessary signaling overheads can be effectively reduced, for example, signaling overheads caused by re-initiating an IP address assignment request by the non-AP STA are reduced.

With reference to the second aspect, in a possible implementation, the method further includes: sending a second communication frame, where the second communication frame includes second indication information, and the second indication information indicates whether the non-AP STA initiates the IP address assignment request.

In this embodiment of this application, the non-AP STA may indicate, to the current AP via the second indication information, whether the non-AP STA initiates the IP address assignment request based on the first indication information. Therefore, the current AP can learn of a specific behavior of the non-AP STA in advance, to improve efficiency of interaction between two communication parties.

With reference to the second aspect, in a possible implementation, the method further includes: when the non-AP STA initiates the IP address assignment request based on the first indication information, deleting a source IP address used by the non-AP STA for data transmission; or when the non-AP STA does not initiate the IP address assignment request based on the first indication information, using a source IP address for data transmission.

With reference to the first aspect or the second aspect, in a possible implementation, the first indication information is included in a neighbor report element in the first communication frame.

With reference to the first aspect or the second aspect, in a possible implementation, the first indication information is included in a fast initial link setup FILS IP address assignment element in the first communication frame.

With reference to the first aspect or the second aspect, in a possible implementation, the FILS IP address assignment element includes an IP address response control field, and the first indication information is included in a 1^{st} bit or an 8^{th} bit in the IP address response control field.

According to a third aspect, an embodiment of this application provides a communication apparatus, configured to perform the method according to the first aspect, the second aspect, or any possible implementation. The communication apparatus includes units that perform the method according to the first aspect, the second aspect, or any possible implementation.

For example, the communication apparatus may be a WLAN device or a chip, and the chip may be used in the WLAN device.

According to a fourth aspect, an embodiment of this application provides a communication apparatus. The communication apparatus includes a processor, configured to perform the method according to the first aspect, the second aspect, or any possible implementation. Alternatively, the processor is configured to execute a program stored in a memory. When the program is executed, the method according to the first aspect, the second aspect, or any possible implementation is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together. For example, the communication apparatus may be a chip.

In a possible implementation, the communication apparatus further includes a transceiver. The transceiver is configured to receive or send a signal.

According to a fifth aspect, an embodiment of this application provides a communication apparatus. The communication apparatus includes a logic circuit and an interface. The logic circuit is coupled to the interface. The interface is configured to input and/or output control information. The logic circuit is configured to perform the method according to the first aspect, the second aspect, or any possible implementation.

According to a sixth aspect, an embodiment of this application provides a computer-readable storage medium. The computer-readable storage medium is configured to store a computer program, and when the computer program is run on a computer, the computer is enabled to perform the method according to the first aspect, the second aspect, or any possible implementation.

According to a seventh aspect, an embodiment of this application provides a computer program product. The computer program product includes a computer program or computer code, and when the computer program or the computer code is run on a computer, the method according to the first aspect, the second aspect, or any possible implementation is performed.

According to an eighth aspect, an embodiment of this application provides a computer program. When the computer program is run on a computer, the method according to the first aspect, the second aspect, or any possible implementation is performed.

According to a ninth aspect, an embodiment of this application provides a communication system. The wireless communication system includes a first communication apparatus and a second communication apparatus, the first communication apparatus is configured to perform the method according to the first aspect or any possible implementation of the first aspect, and the second communication apparatus is configured to perform the method according to the second aspect or any possible implementation of the second aspect.

### BRIEF DESCRIPTION OF DRAWINGS

FIG. 1a and FIG. 1b each are a diagram of an architecture of a communication system according to an embodiment of this application;
FIG. 2a and FIG. 2b each are a diagram of communication between a multi-link device and another device according to an embodiment of this application;
FIG. 3a and FIG. 3b each are a diagram of a roaming scenario according to an embodiment of this application;
FIG. 4 is a schematic flowchart of AP-initiated BSS transition according to an embodiment of this application;
FIG. 5 is a schematic flowchart of DHCP negotiation according to an embodiment of this application;
FIG. 6 is a schematic flowchart of a communication method according to an embodiment of this application;
FIG. 7a is a diagram of a format of a neighbor report element in a BSS transition candidate list according to an embodiment of this application;
FIG. 7b is a schematic flowchart of BTM according to an embodiment of this application;
FIG. 7c is a diagram of a format of a BTM request frame according to an embodiment of this application;
FIG. 7d is a diagram of a format of a BTM query frame according to an embodiment of this application;
FIG. 7e is a diagram of a format of a BTM response frame according to an embodiment of this application;
FIG. 8a and FIG. 8b each are a diagram of a format of an FILS IP address assignment element according to an embodiment of this application;
FIG. 8c is a schematic flowchart of reassociation according to an embodiment of this application; and
FIG. 9 to FIG. 11 each are a diagram of a structure of a communication apparatus according to an embodiment of this application.

### DESCRIPTION OF EMBODIMENTS

For ease of understanding technical solutions this application, the following further describes this application with reference to accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, devices that include a series of steps or units are not limited to listed steps or units, but instead, optionally further include steps units that are not listed, or optionally further include other steps or units inherent to these processes, methods, products, devices.

"Embodiments" mentioned in this specification mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be explicitly and implicitly understood by a person skilled in the art that embodiments described in this specification may be combined with other embodiments.

In this application, "at least one (item)" means one or more, "a plurality of" means two or more, "at least two (items)" means two or three or more, and "and/or" is used to describe an association relationship between associated objects, and indicates that three relationships may exist. For example, "A and/or B" may indicate: only A exists, only B exists, and both A and B exist. A and B may be singular or plural. "Or" indicates that two relationships may exist, for example, only A exists and only B exists. When A and B are not mutually exclusive, it may indicate that three relationships exist, for example, only A exists, only B exists, and both A and B exist. A character "/" generally indicates an "or" relationship between the associated objects. "At least one of the following" or a similar expression thereof means any combination of these items. For example, at least one of a, b, or c may indicate: a, b, c, "a and b", "a and c", "b and c", or "a and b and c".

The technical solutions provided in embodiments of this application may be applied to a WLAN system, for example, Wi-Fi. For example, the method provided in embodiments of this application is applicable to IEEE 802.11 series protocols, for example, the 802.11a/b/g protocol, the 802.11n protocol, the 802.11ac protocol, the 802.11ax protocol, the 802.11be protocol, or a next-generation protocol. Examples are not exhaustively listed. The technical solutions provided in embodiments of this application may be further applied to a UWB technology-based wireless personal area network (wireless personal area network, WPAN). For example, the method provided in embodiments of this application may be applied to IEEE 802.15 series protocols, for example, the 802.15.4a protocol, the 802.15.4z protocol, the 802.15.4ab protocol, or a future generation UWB WPAN protocol. Examples are not exhaustively listed. The technical solutions provided in embodiments of this application may be further applied to the following communication systems, for example, an internet of things (internet of things, IoT) system, a vehicle-to-everything (vehicle to X, V2X) system, and a narrow band internet of things (narrow band internet of things, NB-IoT) system, may be applied to a vehicle-to-everything device, an internet of things node, a sensor, and the like in the internet of things (IoT, internet of things), a smart camera, a smart remote control, and a smart water/electricity meter in a smart home, a sensor in a smart city, and the like, or may be further applied to a long term evolution (long term evolution, LTE) system, a 5th-generation (5th-generation, 5G) communication system, a new communication system emerging in future communication development, and the like.

The WLAN system can provide high-rate and low-latency transmission. With continuous evolution of WLAN application scenarios, the WLAN system is to be applied to more scenarios or industries, for example, the internet of things industry, the vehicle-to-everything industry, the banking industry, enterprise offices, stadiums and exhibition halls, concert halls, hotel rooms, dormitories, hospital wards, classrooms, shopping malls and supermarkets, squares, streets, production workshops, and warehouses. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, or a washing machine) in a smart home, a node in the internet of things, an entertainment terminal (for example, a wearable device like augmented reality (augmented reality, AR) or virtual reality (virtual reality, VR)), a smart device (for example, a printer, a projector, a loudspeaker, or a speaker) in a smart office, a vehicle-to-everything device in the vehicle to everything, an infrastructure (for example, a vending machine, a self-service navigation console in a shopping mall or supermarket, a self-service cashier, or a self-service ordering machine) in a daily life scenario, a device in a large sports and music venue, or the like.

A WLAN is mainly used as an example in embodiments of this application, especially a network applied to the IEEE 802.11 series standards, for example, a system supporting Wi-Fi 7 that may also be referred to as extremely high-throughput (extremely high-throughput, EHT), or a system supporting Wi-Fi 8 that may also be referred to as ultra high reliability (ultra high reliability, UHR) or ultra high reliability and throughput (ultra high reliability and throughput, UHRT). A person skilled in the art easily understands that various aspects in embodiments of this application may be extended to other networks using various standards or protocols, for example, Bluetooth (Bluetooth), a high performance radio LAN (high performance radio LAN, HIPERLAN) (a wireless standard similar to the IEEE 802.11 standard, and mainly used in Europe), a wide area network (WAN), or other networks known or developed in the future.

In a possible implementation, the method provided in embodiments of this application may be applied to a scenario of communication or sensing between an access point (access point, AP) and a non-access point station (non-access point station, non-AP STA) in the WLAN, or the like.

For example, the access point is an apparatus having a wireless communication function, supports communication or sensing by using a WLAN protocol, has a function of communicating with or sensing another device (for example, a non-AP STA or another access point) in the WLAN network, and certainly, may further have a function of communicating with or sensing another device. Alternatively, the access point is equivalent to a bridge that connects a wired network and a wireless network. A main function of the access point is to connect various wireless network clients together and then connect the wireless network to the Ethernet. In the WLAN system, the access point may be referred to as an access point station (AP STA). The apparatus having a wireless communication function may be an entire device, or may be a chip, a processing system, a functional module, or the like mounted to the entire device. The device to which the chip, the processing system, or the functional module is mounted may implement a method, a function, and the like in embodiments of this application under control of the chip, the processing system, or the functional module. The AP in embodiments of this application is an apparatus that provides a service for the non-AP STA, and may support the 802.11 series protocols, subsequent protocols, or the like. For example, the access point may be an access point for a terminal (for example, a mobile phone) to access a wired (or wireless) network, and is mainly deployed at home, inside a building, and inside a campus. A typical coverage radius is tens of meters to 100-odd meters. Certainly, the access point may alternatively be deployed outdoors. For another example, the AP may be a communication entity, for example, a communication server, a router, a switch, or a bridge; or the AP may include various forms of macro base stations, micro base stations, relay stations, and the like.

For example, the non-AP STA is an apparatus having a wireless communication function, supports communication or sensing by using a WLAN protocol, and has a capability of communicating with or sensing another non-AP STA or access point in the WLAN network. For example, the non-AP STA is any user communication device that allows a user to communicate with or sense the AP and further communicate with the WLAN. The apparatus having a wireless communication function may be an entire device, or may be a chip, a processing system, a functional module, or the like mounted to the entire device. The device to which the chip, the processing system, or the functional module is mounted may implement a method, a function, and the like in embodiments of this application under control of the chip, the processing system, or the functional module. For example, the non-AP STA may be a wireless communication chip, a wireless sensor, a wireless communication terminal, or the like, and may also be referred to as a user. For example, the non-AP STA may be a mobile phone, a tablet computer, a set-top box, a smart television, a smart wearable device, a vehicle-mounted communication device, and a computer that supports a Wi-Fi communication function.

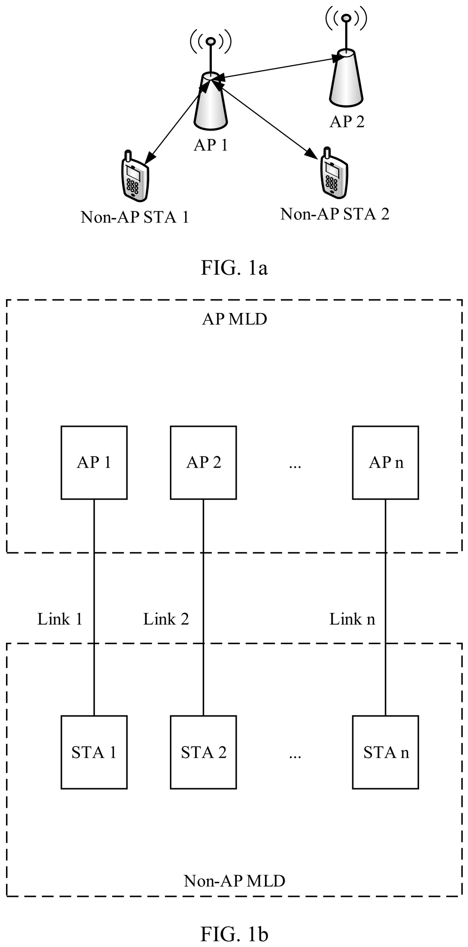

FIG. 1a is a diagram of an architecture of a communication system according to an embodiment of this application. As shown in FIG. 1a, the communication system may include one or more APs and one or more non-AP STAs. FIG. 1a shows two access points: an AP 1 and an AP 2, and two non-AP STAs: a non-AP STA 1 and a non-AP STA 2. It may be understood that the one or more APs may communicate with the one or more non-AP STAs. Certainly, an AP may also communicate with another AP, and a non-AP STA may also communicate with another non-AP STA.

It may be understood that, in FIG. 1a, an example in which the non-AP STA is a mobile phone and the AP is a router is used, and this does not mean that types of the AP and the non-AP STA in embodiments of this application are limited. In addition, FIG. 1a shows an example in which there are only two APs and two non-AP STAs. However, there may be more or less APs or non-AP STAs. This is not limited in embodiments of this application.

In another possible implementation, the method provided in embodiments of this application may be applied to a scenario of communication or sensing between multi-link devices (multi-link devices, MLDs) in the WLAN, or the like.

The multi-link device is a device having a plurality of stations (for example, an AP or a non-AP STA) that separately operate in different frequency bands or channels. The multi-link device includes a plurality of affiliated stations. The affiliated stations may be physical stations, or may be logical stations. Each station may operate on one link, one frequency band, one channel, or the like. The affiliated station may be an AP or a non-AP STA. For ease of description, in embodiments of this application, a multi-link device whose affiliated station is an AP may be referred to as a multi-link AP, a multi-link AP device, or an AP multi-link device (AP multi-link device, AP MLD). A multi-link device whose affiliated station is a non-AP STA is referred to as a multi-link STA, a multi-link STA device, or a STA multi-link device (STA multi-link device). Alternatively, a multi-link device whose affiliated station is a non-AP STA is referred to as a multi-link non-AP, a multi-link non-AP device, or a non-AP multi-link device (non-AP multi-link device, non-AP MLD). The multi-link device (which may be a non-AP MLD or an AP MLD herein) may be a communication apparatus having a wireless communication function. The communication apparatus may be an entire device, or may be a chip, a processing system, a functional module, or the like mounted to the entire device. The device to which the chip, the processing system, or the functional module is mounted may implement a method and a function in embodiments of this application under control of the chip, the processing system, or the functional module.

The multi-link device may implement wireless communication according to 802.11 series protocols, for example, in compliance with EHT, or in compliance with 802.11be or compatible with 802.11be, to implement communication with another device. Certainly, the another device may be a multi-link device, or may not be a multi-link device. A plurality of links are established between one multi-link device and another multi-link device, for example, a link 1, a link 2, and a link n shown in FIG. 1b.

FIG. 1b is a diagram of an architecture of a communication system according to an embodiment of this application. As shown in FIG. 1b, an AP MLD includes an AP 1, an AP 2, ..., and an AP n, and a non-AP MLD includes a STA 1, a STA 2, ..., and a STA n. Herein, n is a positive integer. The AP MLD and the non-AP MLD may perform parallel communication on the link 1, the link 2, ..., and the link n. The STA 1 in the non-AP MLD establishes the link 1 with the AP 1 in the AP MLD, the STA 2 in the non-AP MLD establishes the link 2 with the AP 2 in the AP MLD, the STA n in the non-AP MLD establishes the link with the AP n in the AP MLD, and the like. Therefore, the non-AP MLD and the AP MLD may communicate with each other after establishing an association relationship. For example, the multi-link device in embodiments of this application may be a single-antenna device, or may be a multi-antenna device. For example, the multi-link device may be a device with more than two antennas. A quantity of antennas included in the multi-link device is not limited in embodiments of this application.

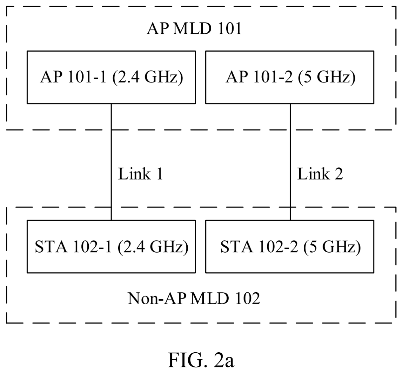

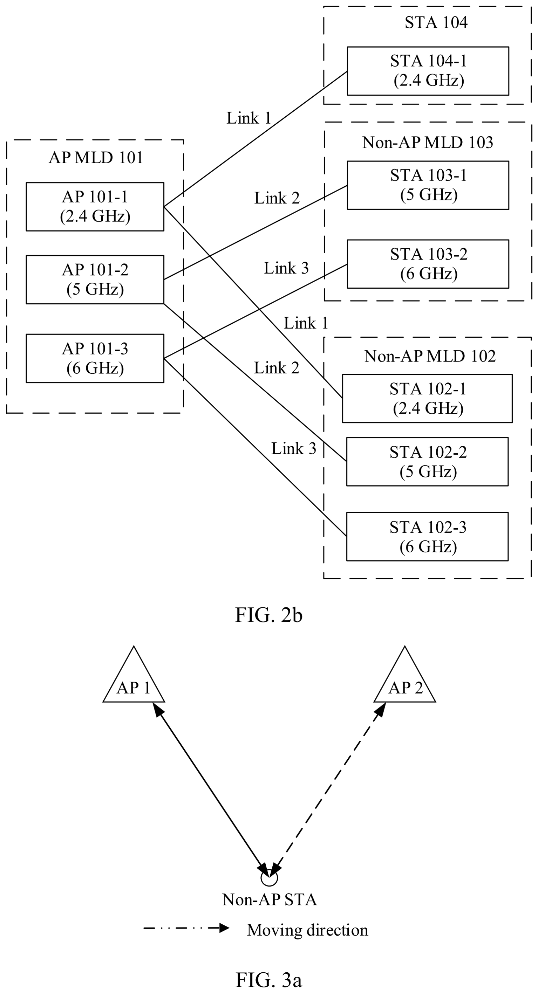

Frequency bands in which the multi-link device operates may include but are not limited to sub 1 GHz, 2.4 GHz, 5 GHz, 6 GHz, and a high frequency 60 GHz. FIG. 2a and FIG. 2b are two diagrams of communication between a multi-link device and another device in a wireless local area network through a plurality of links.

For example, FIG. 2a shows a scenario in which an AP MLD 101 communicates with a non-AP MLD 102. The AP MLD 101 includes an affiliated AP 101-1 and an affiliated AP 101-2. The non-AP MLD 102 includes an affiliated STA 102-1 and an affiliated STA 102-2. The AP MLD 101 and the non-AP MLD 102 perform parallel communication through a link 1 and a link 2.

For example, FIG. 2b shows a scenario in which an AP MLD 101 communicates with a non-AP MLD 102, a non-AP MLD 103, and a STA 104. The AP MLD 101 includes an affiliated AP 101-1 to an affiliated AP 101-3. The non-AP MLD 102 includes three affiliated STAs: a STA 102-1, a STA 102-2, and a STA 102-3. The non-AP MLD 103 includes two affiliated STAs: a STA 103-1 and a STA 103-2. The STA 104 is a single-link device, and includes a STA 104-1. The AP MLD 101 may separately communicate with the non-AP MLD 102 on the link 1, the link 2, and a link 3, communicate with the non-AP MLD 103 on the link 2 and a link 3, and communicate with the STA 104 on the link 1. In an example, the STA 104 operates in the 2.4 GHz frequency band; in the non-AP MLD 103, the STA 103-1 operates in the 5 GHz frequency band, and the STA 103-2 operates in the 6 GHz frequency band; and in the non-AP MLD 102, the STA 102-1 operates in the 2.4 GHz frequency band, the STA 102-2 operates in the 5 GHz frequency band, and the STA 102-3 operates in the 6 GHz frequency band. The AP 101-1 operating in the 2.4 GHz frequency band in the AP MLD 101 may communicate, on the link 1, uplink or downlink data with the STA 104 and the STA 102-1 in the non-AP MLD 102. The AP 101-2 operating in the 5 GHz frequency band in the AP MLD 101 may communicate, on the link 2, uplink or downlink data with the STA 103-1 operating in the 5 GHz frequency band in the non-AP MLD 103, and also communicate, on the link 2, uplink or downlink data with the STA 102-2 operating in the 5 GHz frequency band in the non-AP MLD 102. The AP 101-3 operating in the 6 GHz frequency band in the AP MLD 101 may communicate, on the link 3, uplink or downlink data with the STA 102-3 operating in the 6 GHz frequency band in the non-AP MLD 102, and also communicate, on the link 3, uplink or downlink data with the STA 103-2 in the non-AP MLD.

FIG. 2a shows that the AP MLD supports only two frequency bands. FIG. 2b shows an example in which the AP MLD 101 supports only three frequency bands (2.4 GHz, 5 GHz, and 6 GHz), each frequency band corresponds to one link, and the AP MLD 101 may operate on one or more links of the link 1, the link 2, or the link 3. In practice, the AP MLD and the non-AP MLD may further support more or fewer frequency bands, that is, the AP MLD and the non-AP MLD may operate on more links or fewer links. This is not limited in embodiments of this application. FIG. 2a and FIG. 2b are merely simple diagrams, and do not constitute any limitation on the protection scope of embodiments of this application. It may be understood that, for descriptions of an 802.11 physical layer (physical layer, PHY) and an 802.11 medium access control (medium access control, MAC) layer in the multi-link device, refer to related standards, protocols, or the like. Details are not exhaustively shown in embodiments of this application.

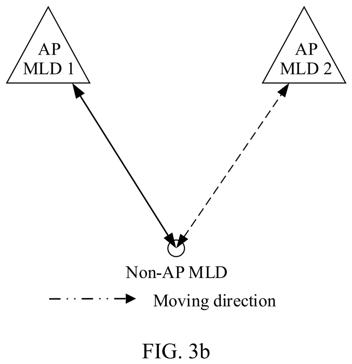

With reference to the foregoing descriptions of the AP, the non-AP STA, the AP MLD, and the non-AP MLD, the following describes a roaming scenario in embodiments of this application with reference to FIG. 3a and FIG. 3b. It may be understood that FIG. 3a is shown by using a single-link device as an example, and FIG. 3b is shown by using a non-AP MLD as an example.

As shown in FIG. 3a, in a roaming scenario, a non-AP STA may be handed over from an AP 1 to an AP 2. For example, the AP 1 may also be understood as an AP currently associated with the non-AP STA, for example, a current AP (current AP), a source AP (source AP), or an old AP (old AP) for short; and the AP 2 may also be understood as a target AP to which the non-AP STA is to be handed over (or referred to as a target AP with which the non-AP STA is to be associated, a target AP that the non-AP STA expects to access, or the like), for example, a target AP (target AP), a destination AP (destination AP), or a new AP (new AP) for short.

As shown in FIG. 3b, in a roaming scenario, a non-AP MLD may be handed over from an AP MLD 1 to an AP MLD 2, that is, the non-AP MLD is handed over from a currently associated AP MLD 1 (for example, may be referred to as a current AP MLD) to a to-be-associated target AP MLD 2 (for example, may be referred to as a target AP MLD).

Regardless of the single-link non-AP STA shown in FIG. 3a or the multi-link non-AP MLD shown in FIG. 3b, an IP address needs to be assigned to the single-link non-AP STA or the multi-link non-AP MLD before data transmission. In other words, all non-AP STAs in the non-AP MLD use a same IP address for data transmission.

For ease of description, the following uses the non-AP STA, the current AP, and the target AP as an example to describe the method provided in embodiments of this application. To be specific, device types (for example, a single-link device or a multi-link device) of the non-AP STA, the current AP, and the target AP are not distinguished in the method below. In other words, the non-AP STA below may be a single-link non-AP STA, or may be a non-AP STA in a non-AP MLD; and the current AP or the target AP may be a single-link AP, or may be an AP in an AP MLD.

It may be understood that the handover of the non-AP STA from the current AP to the target AP in this embodiment of this application may also be referred to as BSS transition (BSS transition), roaming handover of the non-AP STA, or the like. For example, before the handover, the non-AP STA may communicate with the current AP, that is, the non-AP STA establishes an association relationship with the current AP. After the handover, the non-AP STA communicates with the target AP, that is, the non-AP STA establishes an association relationship with the target AP, or the non-AP STA no longer has an association relationship with the current AP or is disconnected from the current AP.

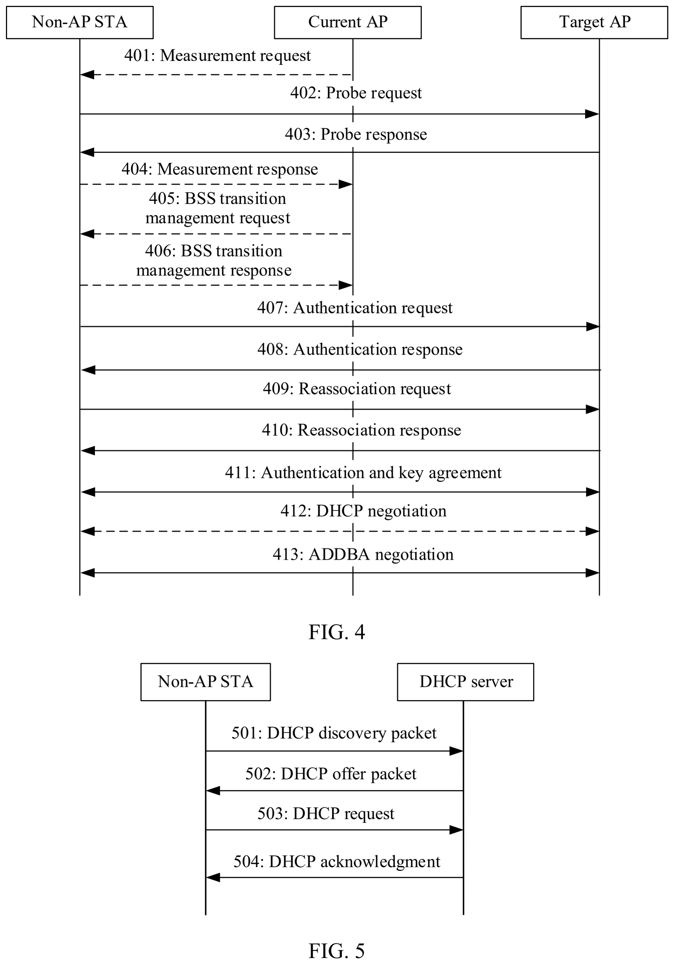

FIG. 4 is a schematic flowchart of AP-initiated BSS transition according to an embodiment of this application. As shown in FIG. 4, a procedure of the BSS transition may include the following steps.

401: A current AP sends a measurement request, and correspondingly, a non-AP STA receives the measurement request.

For example, when detecting that signal strength (or signal quality) of the non-AP STA is less than or equal to a threshold, the current AP may send the measurement request. For example, a measurement type of the measurement request may be set to a beacon request (beacon request). The measurement request may be used to request the non-AP STA to perform channel sounding, to collect a neighbor AP that can be detected around the non-AP STA.

402: The non-AP STA sends a probe request, and correspondingly, a target AP receives the probe request.

403: The target AP sends a probe response, and correspondingly, the non-AP STA receives the probe response.

For example, after receiving the measurement request, the non-AP STA may jump to another channel to send the probe request, and receive the corresponding probe response. Alternatively, after receiving the measurement request, the non-AP STA may jump to another channel to listen to a beacon (beacon) frame.

It may be understood that FIG. 4 is shown by using an example in which the non-AP STA sends the probe request to the target AP. However, in practice, the non-AP STA may send the probe request to a plurality of neighbor APs, and the plurality of neighbor APs include the target AP.

404: The non-AP STA sends a measurement response, and correspondingly, the current AP receives the measurement response.

For example, after receiving related information of the surrounding neighbor AP, the non-AP STA may feed back the related information to the current AP via the measurement response. The measurement response may indicate the current AP to perform a roaming decision. For example, the measurement response may include the related information of the neighbor AP, and the related information may include at least one of the following: a basic service set identifier (BSS identifier, BSSID), an operating class, a channel number, a receive signal strength indicator (receive signal strength indicator, RSSI), or a frame body of a beacon frame or a probe response of a corresponding neighbor AP.

405: The current AP sends a BSS transition management request (BSS transition management request, BTM request), and correspondingly, the non-AP STA receives the BTM request.

For example, the current AP may advise, based on the related information of the surrounding neighbor AP collected by the non-AP STA, the non-AP STA to be handed over to a candidate neighbor AP. In other words, the current AP may recommend one or more candidate target APs, which are also referred to as alternative target APs, or the like. For example, the BSS transition management request may include related information of the one or more candidate target APs.

For example, before step 405, the non-AP STA may further send a BTM query (BTM query), and correspondingly, the current AP receives the BTM query (not shown in FIG. 4).

406: The non-AP STA sends a BSS transition management response (BSS transition management response, BTM response), and correspondingly, the current AP receives the BSS transition management response.

For example, the BTM response may indicate a target AP to which the non-AP STA is accurately handed over, or indicate that the non-AP STA rejects a handover request of the current AP.

It may be understood that the method in FIG. 4 is shown by using an example in which the non-AP STA performs BSS transition based on the measurement request sent by the current AP. In another possible implementation, the non-AP STA may actively perform BSS transition when the non-AP STA does not receive the BTM request sent by the current AP. Alternatively, the method shown in FIG. 4 may not include step 401, step 402, step 405, and step 406. Alternatively, after receiving the BTM request, the non-AP STA may not send the BTM response. In other words, the method in FIG. 4 may include step 405, and does not include step 406.

For example, when the non-AP STA determines to be handed over to the target AP, the non-AP STA and the target AP need to perform data transmission after the following negotiation: for example, an authentication request and response (for example, step 407 and step 408), a reassociation request and response (for example, step 409 and step 410), 801.1X authentication and key agreement (for example, step 411), dynamic host configuration protocol (dynamic host configuration protocol, DHCP) negotiation (for example, step 412), and add block acknowledgment (add block acknowledgement, ADDBA) negotiation (for example, step 413). Execution of the foregoing negotiation process may cause an interruption to service transmission of the non-AP STA, that is, an execution time between step 407 and step 413 may also be understood as a service interruption time of the non-AP STA.

407: The non-AP STA sends the authentication request, and correspondingly, the target AP receives the authentication request.

408: The target AP sends the authentication response, and correspondingly, the non-AP STA receives the authentication response.

409: The non-AP STA sends the reassociation request, and correspondingly, the target AP receives the reassociation request.

410: The target AP sends the reassociation response, and correspondingly, the non-AP STA receives the reassociation response.

In an existing solution, because the non-AP STA cannot determine whether an IP address assignment request needs to be initiated when the non-AP STA is handed over to the target AP, the non-AP STA may include an FILS IP address assignment element in the reassociation request frame to initiate the IP address assignment request. For example, when both the non-AP STA and the target AP support a fast initial link setup (fast initial link setup, FILS) protocol, the reassociation request and the reassociation response may include the FILS IP address assignment element (FILS IP address assignment element). The FILS IP address assignment element may be used to implement negotiation of IP address assignment of the non-AP STA. Therefore, the non-AP STA may not additionally initiate a request for new IP address assignment (that is, the DHCP negotiation shown in FIG. 4), so that a roaming interaction time can be reduced. When both the non-AP STA and the target AP support the FILS protocol, the FILS IP address assignment element included in the reassociation request may be used to request an IP address, and the FILS IP address assignment element included in the reassociation response includes an assigned IP address. Alternatively, the non-AP STA may initiate a separate IP address assignment request. For a manner in which the non-AP STA initiates the IP address assignment request, refer to the descriptions in step 412 or FIG. 5.

411: The non-AP STA performs authentication and key agreement with the target AP.

For example, when a fast transition (fast transition, FT) protocol is utilized between the non-AP STA and the target AP, a key agreement time can be reduced.

412: The non-AP STA performs the DHCP negotiation with the target AP.

For example, the non-AP STA may obtain an IP address through the DHCP negotiation, and the IP address may be used for subsequent data transmission of the non-AP STA. It may be understood that the DHCP negotiation is negotiation between the non-AP STA and a DHCP server. However, in a process in which the non-AP STA negotiates with the DHCP server, related information is forwarded through the target AP. Therefore, in the DHCP negotiation shown in FIG. 4, the non-AP STA and the target AP are used as an example, but this should not be construed as a limitation on embodiments of this application.

FIG. 5 shows an example of a DHCP negotiation procedure. In the procedure shown in FIG. 5, a process in which the target AP forwards information between the non-AP STA and the DHCP server is omitted. As shown in FIG. 5, the DHCP negotiation procedure includes the following steps.

501: The non-AP STA sends a DHCP discovery (DHCP discovery) packet, and correspondingly, the DHCP server (DHCP server) receives the DHCP discovery packet.

502: The DHCP server sends a DHCP offer (DHCP offer) packet, and correspondingly, the non-AP STA receives the DHCP offer packet.

For example, the DHCP offer packet includes information such as an IP address assigned by the DHCP server to the non-AP STA and a lease expiration time. For specific descriptions of the DHCP discovery packet and the DHCP offer packet, refer to a related standard or protocol. Details are not described in embodiments of this application.

503: The non-AP STA sends a DHCP request (DHCP request), and correspondingly, the DHCP server receives the DHCP request.

After receiving the DHCP offer packet, the non-AP STA may extract the IP address from the DHCP offer packet, and then indicate, to the DHCP server via the DHCP request, that the non-AP STA has received the DHCP offer packet.

504: The DHCP server sends a DHCP acknowledgement, and correspondingly, the non-AP STA receives the DHCP acknowledgement.

For example, the DHCP acknowledgement indicates that the DHCP server acknowledges that the DHCP request is received. The DHCP acknowledgement may also be referred to as a DHCP acknowledge (acknowledge, ACK).

It may be understood that the DHCP discovery packet shown above may also be referred to as a DHCP discovery for short, and the DHCP offer packet may also be referred to as a DHCP offer for short. For a specific DHCP negotiation manner, refer to a related standard or protocol. Details are not described in embodiments of this application.

413: The non-AP STA performs the ADDBA negotiation with the target AP.

For example, the non-AP STA may establish a block acknowledgement session to perform data transmission with the target AP. For specific descriptions of step 407 to step 411 and step 413, refer to related standards, protocols, or the like. Details are not described in embodiments of this application. It may be understood that the measurement request shown in FIG. 4 may also be referred to as a measurement request frame, and the measurement response may also be referred to as a measurement response frame; the probe request may also be referred to as a probe request frame, and the probe response may also be referred to as a probe response frame; the BSS transition management request may also be referred to as a BSS transition management request frame, and the BSS transition management response may also be referred to as a BSS transition management response frame; and the like. Examples are not exhaustively listed. In other words, each request shown in this embodiment of this application may also be referred to as a request frame, and each response may also be referred to as a response frame.

It may be understood that the BSS transition procedure shown in FIG. 4 is merely an example. In practice, the non-AP STA may perform some steps in the BSS transition procedure (for example, may not perform step 401, step 402, step 405, and step 406), or some steps shown in FIG. 4 are replaced in another manner (for example, step 407 and step 408 are replaced in another manner). A specific procedure of the BSS transition is not limited in embodiments of this application.

It can be learned from the method shown in FIG. 4 and FIG. 5 that, when the non-AP STA is handed over from the current AP to the target AP, the non-AP STA needs to re-initiate an IP address assignment request, for example, the target IP address (that is, an IP address used for data transmission after the non-AP STA establishes an association with the target AP) is obtained through the reassociation request and the reassociation response, or the target IP address is obtained through the DHCP negotiation. That is, in an existing solution, as long as the non-AP STA performs the BSS transition, the non-AP STA needs to initiate the IP address assignment request.

However, in practice, when a specific condition is met, the non-AP STA does not need to re-initiate the IP address assignment request, and may continue to use a source IP address, to avoid initiating an unnecessary and time-consuming IP address assignment request. This greatly shortens a roaming time and improves user experience.

In view of this, embodiments of this application provide a communication method and apparatus, to effectively optimize an IP address negotiation procedure, avoid unnecessary IP address negotiation, shorten a roaming handover time of a non-AP STA, and reduce a service interruption time. For example, when a current AP and a target AP are in a same layer 2 network, IP addresses assigned by a same DHCP server are usually the same. Therefore, the non-AP STA does not need to re-obtain an IP address when the non-AP STA is handed over from the current AP to the target AP. Therefore, the current AP may send first indication information to the non-AP STA, to indicate that the non-AP STA does not need to initiate an IP address assignment request, so that the roaming time of the non-AP STA can be effectively shortened, and the service interruption time can be reduced. It may be understood that the layer 2 network shown in this embodiment of this application may be understood as having a core layer and an access layer, and having no aggregation layer. For example, "layer 2" and "layer 3" may be understood as classifications based on a logical topology structure, and refer to a core layer, an aggregation layer, and an access layer, instead of a data link layer and a network layer in an international organization for standardization (international organization for standardization, ISO) seven-layer model. The layer 2 network has only the core layer and the access layer but has no aggregation layer. The layer 2 network can implement communication through a MAC address, but a networking capability of the layer 2 network is limited. The layer 2 network may be understood as a security domain, that is, in a same layer 2 network, security of non-AP STAs may be considered to be the same in a term of a network. The descriptions of the layer 2 network herein are merely an example, and should not be construed as a limitation on embodiments of this application.

The IP address may be used to route and address the non-AP STA. Therefore, the IP address may be used to implement data transmission between the non-AP STA and another device. The another device may include but is not limited to the current AP or the target AP. For ease of description, in this embodiment of this application, an example in which the non-AP STA performs data transmission with the current AP and the non-AP STA performs data transmission with the target AP is used to describe the method provided in this embodiment of this application. However, this should not be construed as a limitation on embodiments of this application. A source IP address may be understood as an IP address used by the non-AP STA to perform data transmission when the non-AP STA is associated with the current AP. When the non-AP STA does not initiate the IP address assignment request, the non-AP STA may still continue to use the source IP address when performing data transmission.

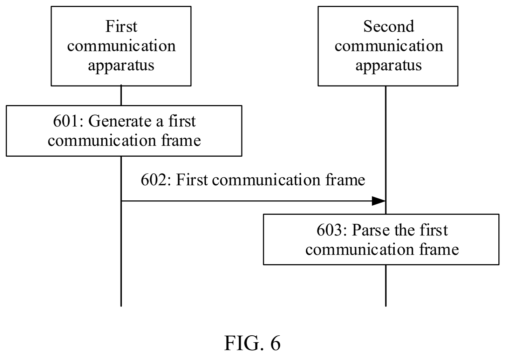

FIG. 6 is a schematic flowchart of a communication method according to an embodiment of this application. The method may be applied to a first communication apparatus or a second communication apparatus. The first communication apparatus may include the current AP or the target AP, and the second communication apparatus may include the non-AP STA. For specific descriptions of the AP or the non-AP STA in the method, refer to FIG. 1a, FIG. 1b, FIG. 2a, FIG. 2b, FIG. 3a, and FIG. 3b. Details are not described herein again. As shown in FIG. 6, the method includes the following steps.

601: The first communication apparatus generates a first communication frame.

The first communication frame includes the first indication information, and the first indication information indicates whether the non-AP STA needs to initiate the IP address assignment request when the non-AP STA is handed over from the current AP to the target AP. Alternatively, the first indication information may be understood as: indicating, during BSS transition, whether the non-AP STA needs to initiate the IP address assignment request, whether the non-AP STA needs to re-initiate an IP address assignment request, or whether the non-AP STA needs to initiate IP address assignment request negotiation. Alternatively, the first indication information may be understood as: indicating whether the non-AP STA needs to initiate the IP address assignment request during roaming handover, and the like. For specific descriptions of the current AP and the target AP, refer to related descriptions in FIG. 3a and FIG. 3b. Details are not described herein again.

In an example, a value of the first indication information being a first value indicating that the non-AP STA needs to initiate the IP address assignment request or that the first indication information is unavailable (unavailable). That the first indication information is unavailable may also be understood as that validity of the first indication information cannot be learned. When the first indication information is unavailable, for a step performed by the non-AP STA based on the first indication information, refer to the step of initiating the IP address assignment request by the non-AP STA. Alternatively, a value of the first indication information being a second value indicates that the non-AP STA does not need to initiate the IP address assignment request.

In another example, the value of the first indication information being the second value may alternatively indicate that the first indication information is included (that is, presents) in a first communication frame, and including the first indication information may also indicate that the non-AP STA does not need to initiate the IP address assignment request.

For example, the first indication information may occupy one bit, the second value may be 1, and the first value may be 0.

For example, the first communication apparatus is the current AP. When the current AP detects that the current AP and the target AP are located in a same layer 2 network and are served by a same DHCP server, the current AP may set the first indication information to indicate that the non-AP STA does not need to initiate the IP address assignment request when the non-AP STA is handed over to the target AP. Alternatively, the first communication apparatus is the target AP. When the target AP detects that the target AP and the current AP are located in a same layer 2 network and are served by a same DHCP server, the target AP may set the first indication information to indicate that the non-AP STA does not need to initiate the IP address assignment request when the non-AP STA is handed over to the target AP.

The following describes in detail a frame format of the first indication information.

### Implementation 1

The first indication information is included in a neighbor report element (neighbor report element) in the first communication frame. For example, the first communication frame may include a BSS transition candidate list (BSS transition candidate list), and the BSS transition candidate list may include one or more neighbor report elements. One neighbor report element may include related information of one neighbor AP. Therefore, each neighbor report element in the BSS transition candidate list may correspond to one neighbor AP. It may be understood that the neighbor AP shown herein may be understood as an alternative target AP, a candidate target AP, or the like. The BSS transition candidate list is optional.

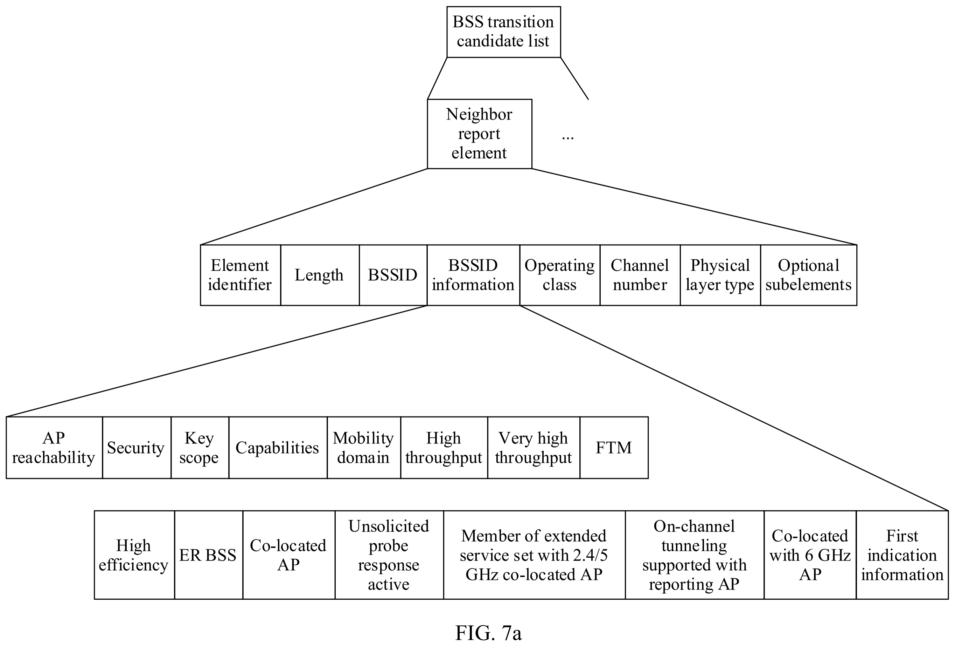

FIG. 7a shows an example of a neighbor report element in the BSS transition candidate list, and an ellipsis in FIG. 7a means omitting another neighbor report element. As shown in FIG. 7a, the neighbor report element may include the following fields: an element identifier (element ID), a length (length), a basic service set identifier (BSS identifier, BSSID), basic service set identifier information (BSSID info), an operating class (operating class), a channel number (channel number), a physical layer type (PHY type), and optional subelements (optional subelements). The BSSID field indicates a BSSID corresponding to a reported neighbor AP. The BSSID information field indicates related information of a reported BSSID. The operating class field and the channel number field indicate a channel to which the reported BSSID belongs. The physical layer type field indicates a physical layer type of an AP corresponding to the reported BSSID.

For example, the BSSID information field may include the following fields: AP reachability (reachability), security (security), a key scope (key scope), capabilities (capabilities), a mobility domain (mobility domain), a high throughput (high throughput), a very high throughput (very high throughput), fine timing measurement (fine timing measurement, FTM), high efficiency (high efficiency), an extended range BSS (extended range BSS, ER BSS), a co-located AP (co-located AP), unsolicited probe response active (unsolicited probe response active), a member of extended service set with 2.4/5 GHz co-located AP (member of extended service set with 2.4/5 GHz co-located AP), on-channel tunneling (on-channel tunneling, OCT) supported with reporting AP (OCT supported with reporting AP), co-located with 6 GHz AP (co-located with 6 GHz AP), and a field including the first indication information.

The field including the first indication information in the BSSID information field uses an original reserved (reserved) bit in the BSSID information field to include the first indication information. For example, the field being set to 1 indicates that the non-AP STA does not need to re-initiate the IP address assignment request; or the field being set to 0 indicates that the non-AP STA needs to re-initiate the IP address assignment request negotiation or the first indication information is unavailable. With reference to a relationship between the neighbor report element and the AP, the field including the first indication information being set to 1 may further indicate that the non-AP STA does not need to re-initiate the IP address assignment request when the non-AP STA is handed over from the current AP to the neighbor AP corresponding to the neighbor report element.

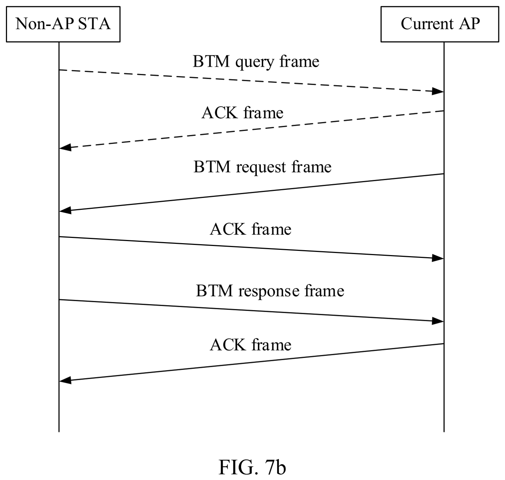

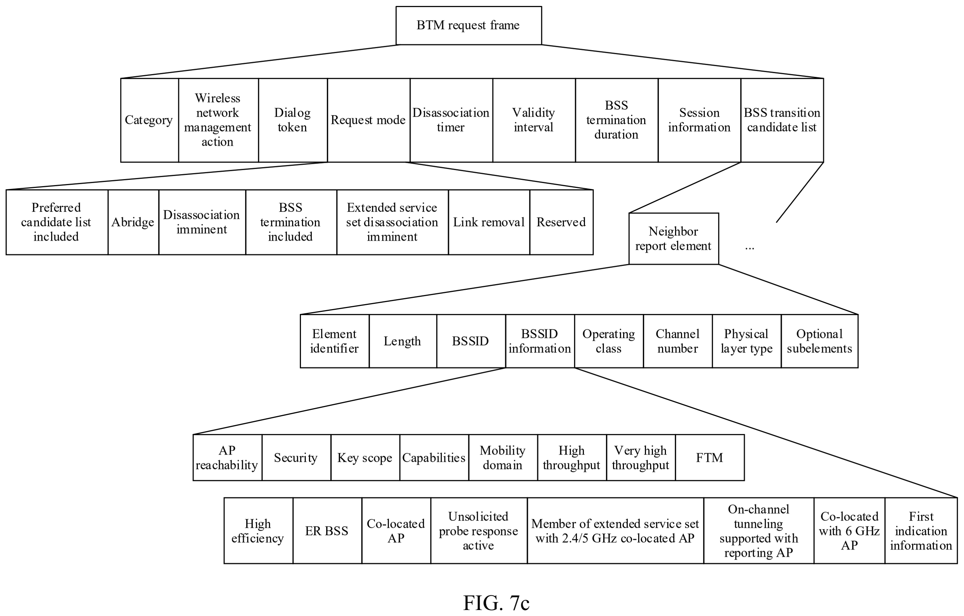

For example, the first communication frame may be a BTM request frame. FIG. 7b is a schematic flowchart of BTM according to an embodiment of this application. As shown in FIG. 7b, the current AP may send the BTM request frame to the non-AP STA. For specific descriptions of FIG. 7b, refer to FIG. 4. Details are not described herein again. FIG. 7c is a diagram of a format of a BTM request frame according to an embodiment of this application. As shown in FIG. 7c, the BTM request frame may include the following fields: a category, a wireless network management action, a dialog token, a request mode (request mode), a disassociation timer (disassociation timer), a validity interval (validity interval), BSS termination duration (BSS termination duration), session information (session info), a universal resource locator (universal resource locator, URL), and a BSS transition candidate list. The BSS transition candidate list is optional. The validity interval field indicates a quantity of beacon (beacon) periods in which the BSS transition candidate list is valid. The disassociation timer field indicates a time that elapses before the current AP sends a disassociation frame.

The request mode field indicates a specific request mode. The request mode field may include the following fields: preferred candidate list included (preferred candidate list included) (which may also be understood as a BSS transition candidate list), abridge (abridge), disassociation imminent (disassociation imminent), BSS termination included (BSS termination included), extended service set (extended service set, ESS) disassociation imminent (ESS disassociation imminent), link removal (link removal), and reserved (reserved) (for example, two bits). The preferred candidate list included field indicates whether to include a preferred candidate list. Usage of the abridge field: If the associated AP does not advise the STA to be handed over to a BSS that does not present in the preferred candidate list or prohibits the STA from being handed over to a BSS that does not present in the preferred candidate list, the abridge field is set to 0; and if the associated AP sets a preference value (preference value) of the BSS that does not present in the preferred candidate list to 0, the abridge field is set to 1. Usage of the disassociation imminent field: The disassociation imminent field being set to 1 indicates that the current AP may send a disassociation frame for being disassociated from the non-AP STA; and the disassociation imminent field being set to 0 indicates that the current AP may not send a disassociation frame for being disassociated from the STA.

It may be understood that for specific descriptions of the BTM request frame, refer to a related standard or protocol. Details are not exhaustively described in embodiments of this application. An ACK frame of the BTM request frame shown in FIG. 7b may be used to acknowledge that the non-AP STA receives the BTM request frame. By analogy, an ACK frame of a BTM query frame may be used to confirm that the current AP receives the BTM query frame, and an ACK frame of a BTM response frame may be used to confirm that the current AP receives the BTM response frame.

In this embodiment of this application, the current AP may send the BTM request frame to the non-AP STA. The BTM request frame includes one or more neighbor report elements, each neighbor report element may include the field including the first indication information, and the first indication information may indicate whether the non-AP STA needs to re-initiate the IP address assignment request when the non-AP STA is handed over from the current AP to the neighbor AP corresponding to the neighbor report element. The value of the first indication information in each neighbor report element may be separately set. For example, the current AP may separately set the value of the first indication information based on a relationship between the current AP and a neighbor AP (namely, a candidate target AP) corresponding to the neighbor report element. For the relationship shown herein, refer to the foregoing related descriptions of the layer 2 network and the same DHCP server. Details are not described herein again.

In an example, when the first indication information indicates that the non-AP STA does not need to re-initiate the IP address assignment request when the non-AP STA is handed over from the current AP to the corresponding neighbor AP (including the target AP), the non-AP STA may not need to initiate the IP address assignment request. Therefore, when performing the BSS transition, the non-AP STA may not need to perform the DHCP negotiation shown in FIG. 4, or a reassociation request frame and a reassociation response frame may not include an FILS IP address assignment element.

In another example, when the first indication information indicates that the non-AP STA needs to re-initiate the IP address assignment request when the non-AP STA is handed over from the current AP to the corresponding neighbor AP (including the target AP), the non-AP STA may include the FILS IP address assignment element in the reassociation request frame (both the non-AP STA and the corresponding neighbor AP support an FILS protocol), or the non-AP STA may initiate the IP address assignment request in a DHCP negotiation phase (as shown in FIG. 5).

With reference to the procedure shown in FIG. 4, when the current AP indicates, to the non-AP STA in the BTM request frame, that the non-AP STA does not need to initiate the IP address assignment request, the reassociation request frame or the reassociation response frame may not include the FILS IP address assignment element, so that workload of parsing the reassociation request frame or the reassociation response frame by both two communication parties is reduced; and in addition, the non-AP STA may not perform the DHCP negotiation, so that a roaming handover time of the non-AP STA is reduced, and a service interruption time of the non-AP STA is reduced.

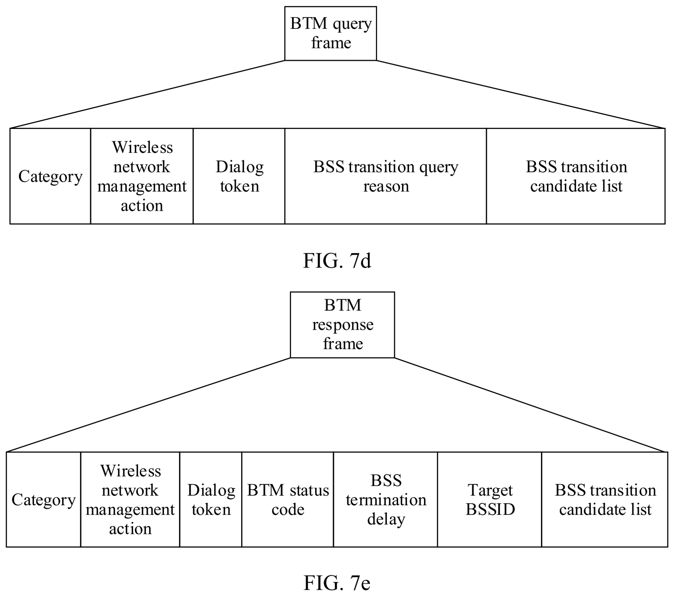

In a possible implementation, before the current AP generates the BTM request frame, the current AP may further receive the BTM query frame from the non-AP STA. For example, as shown in FIG. 7d, the BTM query frame may include the following fields: a category (category), a wireless network management (wireless network management, WNM) action (WNM action), a dialog token (dialog token), a BSS transition query reason (BSS transition query reason), and a BSS transition candidate list (BSS transition candidate list). The BSS transition candidate list is optional. The BSS transition candidate list field includes one or more neighbor report elements. The BSS transition query reason field may indicate a reason why the non-AP STA sends the BTM query frame. For example, for a relationship between a description and a value of the BSS transition query reason field, refer to Table 1. For specific descriptions of the BTM query frame, refer to a related standard or protocol. Details are not described in embodiments of this application. For example, the neighbor report element in the BSS transition candidate list in the BTM query frame may include the first indication information (for example, the first indication information being set to the first value indicates that the first indication information is unavailable), or may not include the first indication information.

**Table 1**

| Value of the BSS transition query reason field | Description |
|---|---|
| 0 | Not specified |
| 1 | High packet loss rate or poor link quality |
| 2 | High delay |
| ... | ... |

In this embodiment of this application, the first indication information is included in the neighbor report element in the BTM request frame, and the current AP may notify the non-AP in advance whether the STA needs to initiate the IP address assignment request. This optimizes IP address negotiation. For example, when the first indication information indicates that the non-AP STA does not need to initiate the IP address assignment request, the roaming handover time of the non-AP STA is shortened, and the non-AP STA may not include the FILS IP address assignment element in the reassociation request frame. This reduces signaling overheads.

### Implementation 2

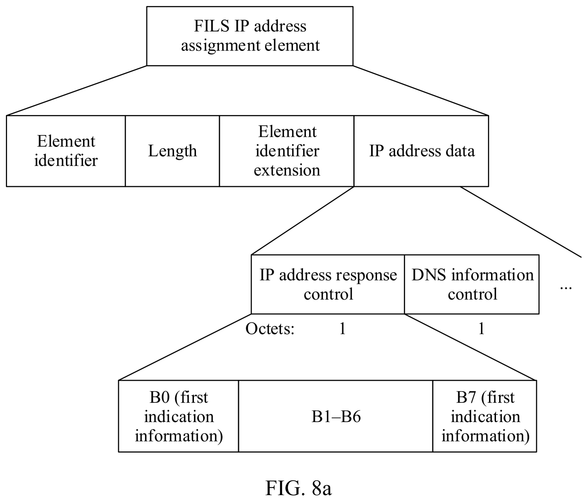

The first indication information is included in a fast initial link setup FILS IP address assignment element in the first communication frame. For example, the FILS IP address assignment element in the first communication frame may include an IP address response control (address response control) field, and the IP address response control field may include a field used to include the first indication information. FIG. 8a shows an example of an FILS IP address assignment element. As shown in FIG. 8a, the FILS IP address assignment element may include the following fields: an element identifier, a length, element identifier extension (element ID extension), and IP address data (IP address data). For example, the IP address data field may include an IP address response control field and a domain name system (domain name system, DNS) information control field.

In an example, the first indication information may be included in a 1^{st} bit or an 8^{th} bit in the IP address response control field. The 1^{st} bit and the 8^{th} bit shown herein are determined in an order from a low-order bit to a high-order bit. As shown in FIG. 8a, the first indication information may be included in a B0 bit or a B7 bit.

In a current solution (or may be understood as another solution), a meaning of each bit in the IP address response control field may be shown in Table 2.

**Table 2**

| Bit | Function | Meaning |
|---|---|---|
| B0 | The IP address is to be determined | A value being set to 1 indicates that the IP address may be fed back later, and the current frame does not contain the IP address |
| B1-B6 | An IP address request times out | When B0 is set to 1, B1-B6 indicate an IP address request timeout time (in seconds), that is, a maximum quantity of seconds that elapses before a new IP address may be fed back |
| B7 | Reserved | |

However, in the solution provided in this embodiment of this application, when the first indication information is included in the B0 bit, the B0 bit being set to 1 may indicate that the non-AP STA does not need to initiate the IP address assignment request, or indicate that the IP address may be fed back later. When the first indication information is included in the B7 bit, the B7 bit being set to 1 may indicate that the non-AP STA does not need to initiate the IP address assignment request. When the first indication information is included in the B7 bit, the B7 bit being set to 1 may also be understood that the IP address response control field includes the field used to include the first indication information. Including the field indicates that the non-AP STA does not need to initiate the IP address assignment request. The B7 bit being set to 0 may also be understood as that the IP address response control field excludes the field used to include the first indication information. Excluding the field indicates that the non-AP STA needs to initiate the IP address assignment request.

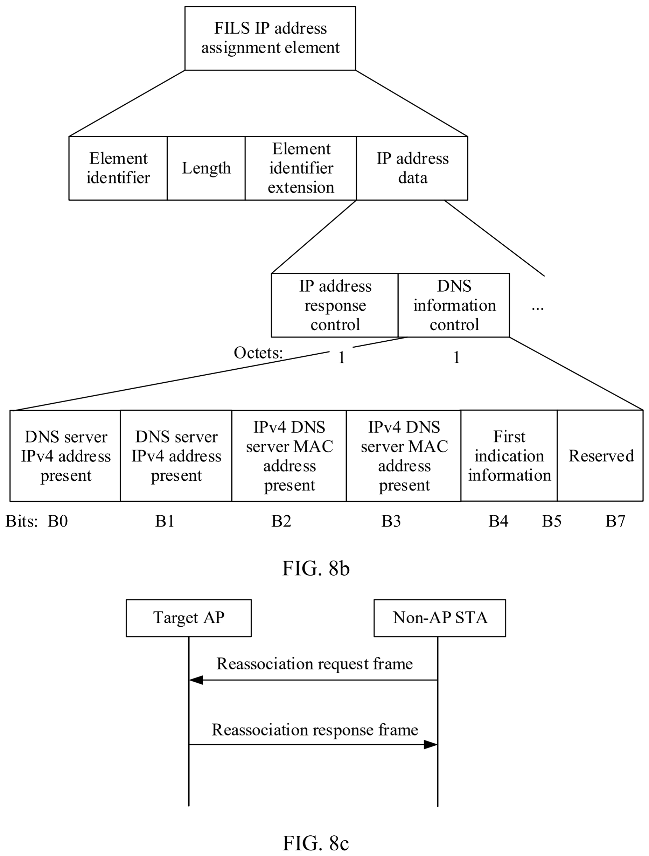

In another example, the first indication information may alternatively be included in a reserved bit in the DNS information control field. For example, as shown in FIG. 8b, the DNS information control field may include a DNS server IPv4 address present (DNS server IPv4 address present) field, a DNS server IPv6 address present (DNS server IPv6 address present) field, an IPv4 DNS server MAC address present (IPv4 DNS server MAC address present) field, an IPv6 DNS server MAC address present (IPv6 DNS server MAC address present) field, a field used to include the first indication information, and a reserved field. For descriptions of the first indication information, refer to FIG. 8a. Details are not described herein again. For descriptions of another field in the DNS information control field, refer to a related standard or protocol.

When the first indication information indicates that the non-AP STA does not need to initiate the IP address assignment request, the non-AP STA may not need to perform a DHCP negotiation procedure shown in FIG. 4 or FIG. 5. When the first indication information indicates that the non-AP STA needs to initiate the IP address assignment request, the FILS IP address assignment element may include a target IP address. Alternatively, the non-AP STA may obtain the target IP address by performing the DHCP negotiation procedure shown in FIG. 4 or FIG. 5.

For example, the first communication frame may be a reassociation response frame. FIG. 8c is a diagram of a reassociation procedure according to an embodiment of this application. As shown in FIG. 8c, the target AP may send the reassociation response frame to the non-AP STA. A format of the reassociation response frame may be shown in Table 3. It may be understood that x1, y1, z1, and ol shown in Table 3 are all integers. Specific values of x1, y1, z1, and o1 are not limited in embodiments of this application. As shown in Table 3, the reassociation response frame includes the FILS IP address assignment element. For specific descriptions of the FILS IP address assignment element, refer to FIG. 8a. Details are not described herein again. For descriptions of another element or field in the reassociation response frame, refer to a related standard or protocol. Details are not described in embodiments of this application.

**Table 3**

| Sequence number | Information |
|---|---|
| 1 | Capability information (capability information) |
| 2 | Status code (status code) |
| 3 | Association identifier (association identifier, AID) |
| 4 | Support rates and BSS membership selectors (support rates and BSS membership selectors) |
| 5 | Extended support rates and BSS membership selectors (extended support rates and BSS membership selectors) |
| 6 | Enhanced distributed channel access (enhanced distributed channel access, EDCA) parameter set |
| ... | ... |
| x1 | Mobility domain element (mobility domain element, MDE) |
| y1 | Fast transition element (fast transition element, FTE) |
| z1 | Basic multi-link element (basic multi-link element) |
| o1 | Fast initial link setup IP address assignment element (FILS IP address assignment element) |
| ... | ... |

In a possible implementation, before the target AP generates the reassociation response frame, the target AP may further receive a reassociation request frame from the non-AP STA. A format of the reassociation request frame may be shown in Table 4, and the FILS IP address assignment element is optional. It may be understood that x2, y2, z2, and o2 shown in Table 4 are all integers. Specific values of x2, y2, z2, and o2 are not limited in embodiments of this application. For specific descriptions of the FILS IP address assignment element included in Table 4, refer to Table 3 or a related standard, protocol, or the like. Details are not described in embodiments of this application. For example, the FILS IP address assignment element in the reassociation response frame may include the first indication information (for example, the first indication information being set to the first value indicates that the first indication information is unavailable), or may not include the first indication information.

**Table 4**

| Sequence number | Information |
|---|---|
| 1 | Capability information (capability information) |
| 2 | Listen interval (listen Interval) |
| 3 | Current AP address (current AP address) |
| 4 | Service set identifier (SSID) |
| 5 | Support rates and basic service set (basic service set, BSS) membership selectors (support rates and BSS membership selectors) |
| 6 | Extended support rates and BSS membership selectors (extended support rates and BSS membership selectors) |
| 7 | Power capability (power capability) |
| 8 | Supported channels (supported channels) |
| ... | ... |
| x2 | MDE |
| y2 | FTE |
| z2 | Basic multi-link element |
| o2 | FILS IP address assignment element |
| ... | ... |

In this embodiment of this application, even if the non-AP STA does not include the FILS IP address assignment element in the reassociation request frame, the target AP may include the FILS IP address assignment element in the reassociation response frame, where the FILS IP address assignment element includes the first indication information.

That the first communication frame shown above is the BTM request frame or the reassociation response frame is merely an example. With progress of a standard, a roaming handover procedure of the non-AP STA may change. As the roaming handover procedure changes (the procedure shown in FIG. 4 changes), the first communication frame may further include another type of communication frame. The descriptions of the first communication frame herein are also applicable to a second communication frame.

602: The first communication apparatus sends the first communication frame, and correspondingly, the second communication apparatus receives the first communication frame.

603: The second communication apparatus parses the first communication frame.

For example, the non-AP STA may determine, by parsing the first indication information in the first communication frame, whether the non-AP STA needs to initiate the IP address assignment request.

In an example, when the first indication information indicates that the non-AP STA does not need to initiate the IP address assignment request, the non-AP STA may not initiate the IP address assignment request. When the non-AP STA does not initiate the IP address assignment request, after being handed over to the target AP, the non-AP STA may continue to use the source IP address to perform data transmission with the target AP. It may be understood that the data transmission shown in this embodiment of this application includes at least one of sending data by the non-AP STA to the target AP and sending data by the target AP to the non-AP STA. To be specific, for the non-AP STA, the data transmission includes at least one of data sending and receiving; and for the target AP, the data transmission includes at least one of data receiving and sending.

In another example, when the first indication information indicates that the non-AP STA needs to initiate the IP address assignment request, the non-AP STA may initiate the IP address assignment request. For example, when the first communication frame is the BTM request frame, for a manner in which the non-AP STA initiates the IP address assignment request, refer to the manner of the reassociation request and the reassociation response shown in FIG. 4, or refer to the DHCP negotiation manner shown in FIG. 4 or FIG. 5. For another example, when the first communication frame is the reassociation response frame, for a manner in which the non-AP STA initiates the IP address assignment request, refer to the DHCP negotiation manner shown in FIG. 4 or FIG. 5. When the non-AP STA initiates the IP address assignment request, the non-AP STA may delete the source IP address. After obtaining the target IP address, the non-AP STA may perform the data transmission with the target AP by using the target IP address. The non-AP STA deletes the source IP address before the non-AP STA obtains the target IP address or after the non-AP STA obtains the target IP address. This is not limited in embodiments of this application.

Certainly, when the first indication information indicates that the non-AP STA does not need to initiate the IP address assignment request, the non-AP STA may also initiate the IP address assignment request. For example, if the non-AP STA is a legacy (legacy) STA, the non-AP STA cannot parse the first indication information, and the non-AP STA may still initiate the IP address assignment request.

In a possible implementation, the method shown in FIG. 6 may further include: The non-AP STA sends the second communication frame, and correspondingly, the current AP receives the second communication frame.

For example, as shown in FIG. 7b, when the first communication frame is the BTM request frame, the non-AP STA may send the second communication frame, and the second communication frame may be the BTM response frame. As shown in FIG. 7e, the BTM response frame may include the following fields: a category, a wireless network management action, a dialog token, a BTM status code (status code), a BSS termination delay (BSS termination delay), a target BSSID (Target BSSID), and a BSS transition candidate list. The target BSSID and the BSS transition candidate list are optional. For example, when a value of the BTM status code field is 0, the BTM response frame may include the target BSSID field. The BTM status code field may indicate whether the BSS transition request is accepted. The BSS termination delay indicates a time period from a current time to a termination time of the BSS. For example, for a relationship between a description and the value of the BTM status code, refer to Table 5. Values of the BTM status code shown in Table 5 are merely examples. With progress of a standard, the BTM status code may further have more values, more meanings, or the like.

**Table 5**

| Value of the BTM status code | Description |
|---|---|
| 0 | Accepted |
| 1 | Rejected due to an unknown reason |
| 2 | Rejected because a beacon frame of a candidate neighbor is received or a probe response is not enough |
| 3 | Rejected because an available capacity of the candidate neighbor is not enough |
| ... | ... |

In an example, a neighbor report element in the BSS transition candidate list shown in FIG. 7e may include the first indication information. For specific descriptions of the BSS transition candidate list shown in FIG. 7e, refer to FIG. 7a. Details are not described herein again. In other words, the neighbor report element in the BSS transition candidate list in the BTM response frame may be the same as the corresponding neighbor report element in the BSS transition candidate list in the BTM request frame.

In another example, the last bit in the BSSID information in the neighbor report element in the BSS transition candidate list shown in FIG. 7e is still a reserved bit.

In still another example, the last first bit in the BSSID information in the neighbor report element in the BSS transition candidate list shown in FIG. 7e is used to include second indication information, and the second indication information may indicate whether the non-AP STA initiates the IP address assignment request. In other words, the non-AP STA may indicate, to the current AP via the second indication information, whether the non-AP STA initiates the IP address assignment request based on the first indication information. Therefore, the current AP can learn of a specific behavior of the non-AP STA in advance, to improve efficiency of interaction between two communication parties.

In this embodiment of this application, the first communication apparatus explicitly indicates, via the first indication information, whether the non-AP STA needs to initiate the IP address assignment request, so that the non-AP STA can explicitly learn, based on the first indication information, whether the non-AP STA needs to initiate the IP address assignment request. For example, when the first indication information indicates that the non-AP STA does not need to initiate the IP address assignment request, according to the method provided in this embodiment of this application, the roaming handover time of the non-AP STA can be effectively shortened, the service interruption time can be reduced, and an unnecessary IP address assignment request can be effectively avoided, to optimize an IP address negotiation procedure. For example, when the first indication information indicates that the non-AP STA needs to initiate the IP address assignment request, necessity of re-initiating the IP address assignment request by the non-AP STA is improved.

In embodiments shown in this application, a "field" is used as an example for illustration, and a "field" is not specifically distinguished from a "subfield" and the like. Although the "field" and the "subfield" are not specifically distinguished in embodiments shown in this application, a person skilled in the art may adaptively distinguish between a relationship between the fields (or elements and fields) shown in this application.

Communication apparatuses provided in embodiments of this application are described below.

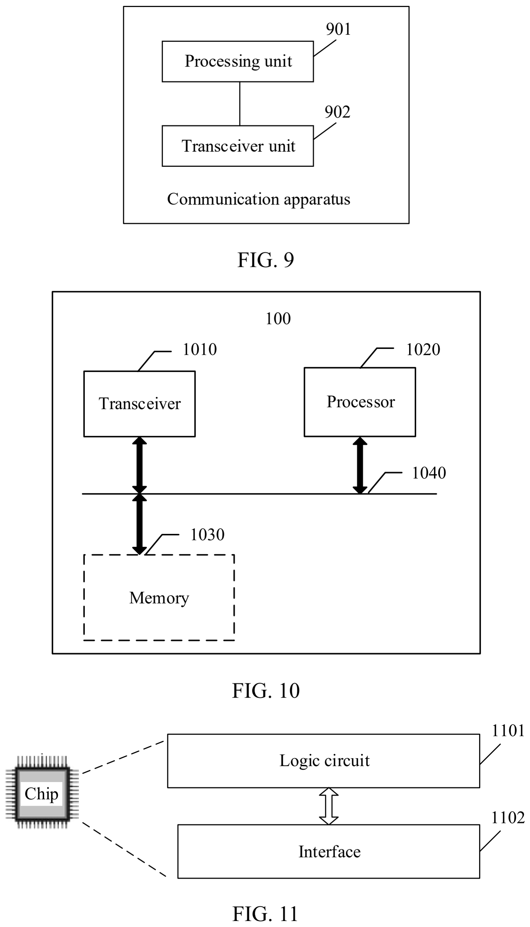

In this application, the communication apparatus is divided into functional modules based on the foregoing method embodiments. For example, each functional module may be divided to each corresponding function, or two or more functions may be integrated into one processing module. The integrated module may be implemented in a form of hardware, or may be implemented in a form of software functional module. It should be noted that, in this application, module division is an example, and is merely a logical function division. In practice, another division manner may be used. The following describes in detail the communication apparatuses in embodiments of this application with reference to FIG. 9 to FIG. 11.

FIG. 9 is a diagram of a structure of a communication apparatus according to an embodiment of this application. As shown in FIG. 9, the communication apparatus includes a processing unit 901 and a transceiver unit 902. The transceiver unit 902 may implement a corresponding communication function, and the processing unit 901 is configured to process data. For example, the transceiver unit 902 may also be referred to as a communication interface, or a communication unit.

In some embodiments of this application, the communication apparatus may be configured to perform an action performed by the first communication apparatus (like the current AP or the target AP) in the foregoing method embodiments. In this case, the communication apparatus may be a WLAN device, a chip or a functional module that are configured in the WLAN device, or the like. The transceiver unit 902 is configured to perform a sending/receiving-related operation of the first communication apparatus in the foregoing method embodiments. The processing unit 901 is configured to perform a processing-related operation of the first communication apparatus in the foregoing method embodiments.

For example, the processing unit 901 is configured to generate a first communication frame; and the transceiver unit 902 is configured to send or output the first communication frame.

It may be understood that the transceiver unit 902 may send the first communication frame to another communication apparatus, or the transceiver unit 902 outputs the first communication frame from the processing unit 901 to another component, another functional module, or the like in the first communication apparatus. Related descriptions of outputting other information by the transceiver unit are similar. Details are not described below again.

For example, the transceiver unit 902 is configured to input or receive a second communication frame. The processing unit 901 is further configured to parse the second communication frame.

In some other embodiments of this application, the communication apparatus may be configured to perform an action performed by the non-AP STA in the foregoing method embodiments. In this case, the communication apparatus may be a WLAN device, a chip or a functional module that are configured in the WLAN device, or the like. The transceiver unit 902 is configured to perform a sending/receiving-related operation of the non-AP STA in the foregoing method embodiments. The processing unit 901 is configured to perform a processing-related operation of the non-AP STA in the foregoing method embodiments.

The transceiver unit 902 is configured to receive or input the first communication frame; and the processing unit 901 is configured to parse the first communication frame.

For example, the transceiver unit 902 is configured to output or send the second communication frame.

Optionally, the communication apparatus may further include a storage unit. The storage unit may be configured to store instructions and/or data. The processing unit 901 may read the instructions and/or data in the storage unit, so that the communication apparatus implements the foregoing method embodiments. For example, the storage unit may be configured to store information like an IP address.

It may be understood that the specific descriptions of the transceiver unit and the processing unit in embodiments of this application are merely examples. For specific functions, steps, or the like performed by the transceiver unit and the processing unit, refer to the foregoing method embodiments. Details are not described herein again.

In the foregoing embodiments, for descriptions of the first communication frame, the first indication information, the second communication frame, and the like, refer to the descriptions in the foregoing method embodiments. Details are not described herein again.

The foregoing describes the communication apparatus in embodiments of this application. The following describes possible product forms of the communication apparatus. It should be understood that any form of product that has a function of the communication apparatus in FIG. 9 falls within the protection scope of embodiments of this application. It should be further understood that the following descriptions are merely examples, and do not limit the product form of the communication apparatus in embodiments of this application.

In a possible implementation, in the communication apparatus shown in FIG. 9, the processing unit 901 may be one or more processors, and the transceiver unit 902 may be a transceiver or the transceiver unit 902 may include a sending unit and a receiving unit. The sending unit may be a transmitter, and the receiving unit may be a receiver. The sending unit and the receiving unit are integrated into one device, for example, a transceiver. In this embodiment of this application, the processor and the transceiver may be coupled, or the like. A manner of connection between the processor and the transceiver is not limited in embodiments of this application. In a process of performing the foregoing method, a process of sending information in the foregoing method may be understood as a process of outputting the information by the processor. When outputting the information, the processor outputs the information to the transceiver, so that the transceiver transmits the information. After the information is output by the processor, other processing may further need to be performed on the information before processed information arrives at the transceiver. Similarly, a process of receiving information in the foregoing method may be understood as a process of receiving the input information by the processor. When the processor receives the input information, the transceiver receives the information, and inputs the information into the processor. Further, after the transceiver receives the information, other processing may need to be performed on the information before the information is received by the processor.

As shown in FIG. 10, a communication apparatus 100 includes one or more processors 1020 and a transceiver 1010.

In some embodiments of this application, the communication apparatus may be configured to perform the steps, the functions, or the like performed by the first communication apparatus in the foregoing method embodiments.

For example, the processor 1020 is configured to generate a first communication frame; and the transceiver 1010 is configured to send the first communication frame.

For example, the transceiver 1010 is configured to receive a second communication frame; and the processor 1020 is configured to parse the second communication frame.

In some other embodiments of this application, the communication apparatus may be configured to perform the steps, the functions, or the like performed by the non-AP STA in the foregoing method embodiments.

The transceiver 1010 is configured to receive a first communication frame; and the processor 1020 is configured to parse the first communication frame.

For example, the transceiver 1010 is configured to send a second communication frame. For example, the processor 1020 is further configured to generate a second communication frame.

It may be understood that specific descriptions of the transceiver and the processor in embodiments of this application are merely examples. For specific functions, steps, or the like performed by the transceiver and the processor, refer to the foregoing method embodiments. Details are not described herein again.

In the foregoing embodiments, for descriptions of the first communication frame, the first indication information, the second communication frame, and the like, refer to the descriptions in the foregoing method embodiments. Details are not described herein again.

In each implementation of the communication apparatus shown in FIG. 10, the transceiver may include a receiver and a transmitter. The receiver is configured to perform a receiving function (or operation). The transmitter is configured to perform a transmitting function (or operation). The transceiver is configured to communicate with another device/apparatus through a transmission medium.

Optionally, the communication apparatus 100 may further include one or more memories 1030, configured to store program instructions, data, and/or the like. The memory 1030 is coupled to the processor 1020. The coupling in this embodiment of this application may be an indirect coupling or a communication connection between apparatuses, units, or modules in an electrical form, a mechanical form, or another form, and is used for information exchange between the apparatuses, the units, or the modules. The processor 1020 may operate in cooperation with the memory 1030. The processor 1020 may execute the program instructions stored in the memory 1030. Optionally, at least one of the one or more memories may be included in the processor. For example, the memory may be configured to store an IP address and the like.

A specific connection medium between the transceiver 1010, the processor 1020, and the memory 1030 is not limited in embodiments of this application. In this embodiment of this application, the memory 1030, the processor 1020, and the transceiver 1010 are connected through a bus 1040 in FIG. 10. The bus is indicated by using a thick line in FIG. 10. A manner of connection between other components is merely an example for description, and is not limited thereto. The bus may be classified into an address bus, a data bus, a control bus, and the like. For ease of indication, the bus is indicated by only one bold line in FIG. 10. However, it does not indicate that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general purpose processor may be a microprocessor or any conventional processor or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory, for example, a hard disk drive (hard disk drive, HDD) or a solid-state drive (solid-state drive, SSD), a random access memory (random access memory, RAM), an erasable programmable read-only memory (erasable programmable ROM, EPROM), a read-only memory (read-only memory, ROM), or a compact disc read-only memory (compact disc read-only memory, CD-ROM). The memory is any storage medium that can be used to include or store program code in a form of instruction or data structure and that can be read and/or written by a computer (for example, the communication apparatus shown in this application). However, this is not limited thereto. The memory in embodiments of this application may alternatively be a circuit or any other apparatus that can implement a storage function, and is configured to store program instructions and/or data.

For example, the processor 1020 is mainly configured to: process a communication protocol and communication data, control the entire communication apparatus, execute a software program, and process data of the software program. The memory 1030 is mainly configured to store the software program and data. The transceiver 1010 may include a control circuit and an antenna. The control circuit is mainly configured to: perform conversion between a baseband signal and a radio frequency signal and process the radio frequency signal. The antenna is mainly configured to: receive and send a radio frequency signal in a form of electromagnetic wave. The input/output apparatus, for example, a touchscreen, a display, or a keyboard, is mainly configured to: receive data input by a user and output data to a user.

After the communication apparatus is powered on, the processor 1020 may read the software program in the memory 1030, interpret and execute instructions of the software program, and process data of the software program. When data needs to be sent in a wireless manner, the processor 1020 performs baseband processing on the to-be-sent data, and then outputs a baseband signal to a radio frequency circuit, and the radio frequency circuit performs radio frequency processing on the baseband signal, and then sends a radio frequency signal to the outside in a form of electromagnetic wave through the antenna. When data is sent to the communication apparatus, the radio frequency circuit receives the radio frequency signal through the antenna, converts the radio frequency signal into a baseband signal, and outputs the baseband signal to the processor 1020. The processor 1020 converts the baseband signal into data and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

It may be understood that the communication apparatus shown in embodiments of this application may further have more components and the like than those in FIG. 10. This is not limited in embodiments of this application. The methods performed by the processor and the transceiver are merely examples. For specific steps performed by the processor and the transceiver, refer to the methods described above.

In another possible implementation, in the communication apparatus shown in FIG. 9, the processing unit 901 may be one or more logic circuits, and the transceiver unit 902 may be an input/output interface that is also referred to as a communication interface, an interface circuit, an interface, or the like. Alternatively, the transceiver unit 902 may be a sending unit and a receiving unit. The sending unit may be an output interface, and the receiving unit may be an input interface. The sending unit and the receiving unit are integrated into one unit, for example, an input/output interface. As shown in FIG. 11, a communication apparatus shown in FIG. 11 includes a logic circuit 1101 and an interface 1102. In other words, the processing unit 901 may be implemented by using the logic circuit 1101, and the transceiver unit 902 may be implemented by using the interface 1102. The logic circuit 1101 may be a chip, a processing circuit, an integrated circuit, a system on chip (system on chip, SoC), or the like. The interface 1102 may be a communication interface, an input/output interface, a pin, or the like. For example, FIG. 11 shows an example in which the communication apparatus is a chip. The chip includes the logic circuit 1101 and the interface 1102.

In this embodiment of this application, the logic circuit and the interface may be coupled to each other. A specific manner of connection between the logical circuit and the interface is not limited in embodiments of this application.

In some embodiments of this application, the communication apparatus may be configured to perform the steps, the functions, or the like performed by the first communication apparatus in the foregoing method embodiments.

For example, the logic circuit 1101 is configured to generate a first communication frame; and the interface 1102 is configured to output the first communication frame.

For example, the interface 1102 is configured to input a second communication frame; and the logic circuit 1101 is configured to parse the second communication frame.

In some other embodiments of this application, the communication apparatus may be configured to perform the steps, the functions, or the like performed by the non-AP STA in the foregoing method embodiments.

The interface 1102 is configured to input a first communication frame; and the logic circuit 1101 is configured to parse the first communication frame.

For example, the interface 1102 is configured to output a second communication frame. For example, the logic circuit 1101 is further configured to generate the second communication frame.

It may be understood that specific descriptions of the logic circuit and the interface in embodiments of this application are merely examples. For specific functions, steps, or the like performed by the logic circuit and the interface, refer to the foregoing method embodiments. Details are not described herein again.

For example, the chip may further include a memory, and the memory may be configured to store an IP address.

In the foregoing embodiments, for descriptions of the first communication frame, the first indication information, the second communication frame, and the like, refer to the descriptions in the foregoing method embodiments. Details are not described herein again.

It may be understood that the communication apparatus shown in this embodiment of this application may implement the methods provided in embodiments of this application in a form of hardware, or may implement the methods provided in embodiments of this application in a form of software. This is not limited in embodiments of this application.

An embodiment of this application further provides a communication system. The communication system includes a first communication apparatus (for example, a current AP or a target AP) and a non-AP STA. For descriptions of the current AP (or the target AP) and the non-AP STA, refer to the foregoing descriptions.

In addition, this application further provides a computer program. The computer program is used to implement the operations and/or processing performed by the current AP or the target AP in the method provided in this application.

This application further provides a computer program. The computer program is used to implement the operations and/or processing performed by the non-AP STA in the method provided in this application.

This application further provides a computer-readable storage medium. The computer-readable storage medium stores computer code. When the computer code is run on a computer, the computer is enabled to perform operations and/or processing performed by the current AP or the target AP in the method provided in this application.

This application further provides a computer-readable storage medium. The computer-readable storage medium stores computer code. When the computer code is run on a computer, the computer is enabled to perform operations and/or processing performed by the non-AP STA in the method provided in this application.

This application further provides a computer program product. The computer program product includes computer code or a computer program. When the computer code or the computer program is run on a computer, the operations and/or processing performed by the current AP or the target AP in the method provided in this application are/is performed.

This application further provides a computer program product. The computer program product includes computer code or a computer program. When the computer code or the computer program is run on a computer, the operations and/or processing performed by the non-AP STA in the method provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in practice. For example, a plurality of units or components may be combined or integrated into another system, or some features may be ignored or not performed. In addition, the displayed or discussed mutual coupling or direct coupling or communication connection may be implemented through some interfaces, indirect coupling or communication connections between the apparatuses or units, or electrical connections, mechanical connections, or connections in other forms.

The units described as separate parts may or may not be physically separate, and parts displayed as units may or may not be physical units, that is, may be located at one location, or may be distributed on a plurality of network units. Some or all of the units may be selected based on an actual requirement to implement technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
generating a first communication frame, wherein the first communication frame comprises first indication information, and the first indication information indicates whether a non-access point station non-AP STA needs to initiate an internet protocol IP address assignment request when the non-AP STA is handed over from a current access point AP to a target AP; and
sending the first communication frame.

2. The method according to claim 1, wherein the first indication information is comprised in a neighbor report element in the first communication frame.

3. The method according to claim 1, wherein the first indication information is comprised in a fast initial link setup FILS IP address assignment element in the first communication frame.

4. The method according to claim 3, wherein the FILS IP address assignment element comprises an IP address response control field, and the first indication information is comprised in a 1^{st} bit or an 8^{th} bit in the IP address response control field.

5. The method according to any one of claims 1 to 4, wherein a value of the first indication information being a first value indicates that the non-AP STA needs to initiate the IP address assignment request; or a value of the first indication information being a second value indicates that the non-AP STA does not need to initiate the IP address assignment request.

6. The method according to any one of claims 1 to 5, wherein the first communication frame is any one of the following: a basic service set BSS transition management BTM request frame and a reassociation response frame.

7. A communication method, wherein the method comprises:
receiving a first communication frame, wherein the first communication frame comprises first indication information, and the first indication information indicates whether a non-access point station non-AP STA needs to initiate an internet protocol IP address assignment request when the non-AP STA is handed over from a current access point AP to a target AP; and
parsing the first communication frame.

8. The method according to claim 7, wherein the method further comprises:
sending a second communication frame, wherein the second communication frame comprises second indication information, and the second indication information indicates whether the non-AP STA initiates the IP address assignment request.

9. The method according to claim 7 or 8, wherein the first indication information is comprised in a neighbor report element in the first communication frame.

10. The method according to claim 7 or 8, wherein the first indication information is comprised in a fast initial link setup FILS IP address assignment element in the first communication frame.

11. The method according to claim 10, wherein the FILS IP address assignment element comprises an IP address response control field, and the first indication information is comprised in a 1^{st} bit or an 8^{th} bit in the IP address response control field.

12. The method according to any one of claims 7 to 11, wherein the first communication frame is any one of the following: a basic service set BSS transition management BTM request frame and a reassociation response frame; and
the second communication frame is a BTM response frame.

13. The method according to any one of claims 7 to 12, wherein the method further comprises:
when the non-AP STA initiates the IP address assignment request based on the first indication information, deleting a source IP address used by the non-AP STA for data transmission; or
when the non-AP STA does not initiate the IP address assignment request based on the first indication information, using a source IP address for data transmission.

14. A communication apparatus, comprising a unit configured to perform the method according to any one of claims 1 to 13.

15. A communication apparatus, comprising a processor and a memory, wherein
the memory is configured to store instructions; and
the processor is configured to execute the instructions, to perform the method according to any one of claims 1 to 13.

16. A communication apparatus, comprising a logic circuit and an interface, wherein the logic circuit is coupled to the interface, the interface is configured to input and/or output code instructions, and the logic circuit is configured to execute the code instructions, to perform the method according to any one of claims 1 to 13.

17. A computer-readable storage medium, wherein the computer-readable storage medium is configured to store a computer program, and when the computer program is executed, the method according to any one of claims 1 to 13 is performed.

18. A communication system, wherein the communication system comprises a first communication apparatus and a second communication apparatus, the first communication apparatus is configured to perform the method according to any one of claims 1 to 6, and the second communication apparatus is configured to perform the method according to any one of claims 7 to 13.
